**Europäisches Patentamt**

(19) **European Patent Office**

**Office européen des brevets**

(11) Veröffentlichungsnummer: **0 077 320**
**B1**

(12) **EUROPÄISCHE PATENTSCHRIFT**

(45) Veröffentlichungstag der Patentschrift:
04.12.85

(51) Int. Cl.⁴: **B 22 D 11/10**, B 22 D 41/06

(21) Anmeldenummer: **82890141.3**

(22) Anmeldetag: **04.10.82**

(54) Tragturm für ein metallurgisches Gefäss.

(30) Priorität: **09.10.81 AT 4346/81**

(43) Veröffentlichungstag der Anmeldung:
**20.04.83 Patentblatt 83/16**

(45) Bekanntmachung des Hinweises auf die Patenterteilung:
**04.12.85 Patentblatt 85/49**

(84) Benannte Vertragsstaaten:
**BE CH DE FR GB IT LI LU NL SE**

(56) Entgegenhaltungen:
**EP - A - 0 017 696**
**AT - B - 355 747**
**DE - A - 1 964 231**
**DE - A - 2 430 786**
**DE - A - 2 937 855**

(73) Patentinhaber: **VOEST-ALPINE Aktiengesellschaft, Werksgelände, A-4010 Linz (AT)**

(72) Erfinder: **Die Erfinder haben auf ihre Nennung verzichtet**

(74) Vertreter: **Wolfram, Gustav, Dipl.-Ing., Schwindgasse 7 P.O. Box 205, A-1041 Wien (AT)**

## Beschreibung

Die Erfindung betrifft einen Tragturm für ein metallurgisches Gefäß, insbesondere für eine Gießpfanne bei einer Stranggießanlage, mit mindestens einem von einer unverdrehbaren Tragsäule auskragenden und um die Tragsäule schwenkbaren, mindestens ein metallurgisches Gefäß haltenden Tragarm, wobei zwischen dem Tragarm und der Tragsäule ein einziges Axial- und Radialkräfte aufnehmendes Drehlager vorgesehen ist, das mit einer unterseitigen Schulter eines ersten Lagerringes an einer am oberen Ende der Tragsäule angeordneten Stützfläche aufliegt.

Ein Tragturm dieser Art ist aus der EP-A-0 017 696 bekannt. Da die Anordnung einer Stranggießanlage in einem Stahlwerk meist so eingeplant ist, daß der Tragturm im Bereich des Kranschattens zwischen einem Gießkran der Gießhalle und einem Montagekran in der angrenzenden Zurichthalle aufgestellt ist, bereitet jede Manipulation größerer Teile des Tragturmes Schwierigkeiten; meist ist die Zuhilfenahme beider Kräne gleichzeitig unter Verwendung von Sondergehängen erforderlich.

Es ist auch möglich, zu diesem Zweck einen Mobilkran zu verwenden, wobei es jedoch oft erforderlich sein kann, einen Teil einer der beiden Kranbahnen und entsprechende Leitungen abzubauen, um die für den Mobilkran notwendigen Hubhöhen zu erreichen bzw. Freiraum zu schaffen.

Sowohl die Verwendung beider Großkräne gleichzeitig als auch die Verwendung eines Mobilkranes erfordern einen hohen Zeit- und Arbeitsaufwand.

Einen wartungsintensiven Teil eines Tragturmes stellt die Drehlagerung zwischen dem Tragarm und der Tragsäule dar. Will man diese Drehlagerung freilegen — zwecks Kontrolle, Wartung oder Austausch —, ist dies bei dem bekannten Tragturm nur nach Abbau des Tragarmes möglich. Man muß den Tragarm vom Tragturm abheben und anderweitig abstellen, bevor man zur Drehlagerung vordringen kann.

Die Erfindung bezweckt die Vermeidung dieser Nachteile und Schwierigkeiten und stellt sich die Aufgabe, einen Tragturm der eingangs bezeichneten Art zu schaffen, bei dem eine einfache Kontrolle, Wartung und ein einfacher und schneller Ausbau der Drehlagerung möglich ist, wobei man ohne Großkran das Auslangen findet und der Tragarm am Tragturm verbleiben kann, d. h. nicht vom Tragturm abgehoben und entfernt werden muß.

Diese Aufgabe wird erfindungsgemäß nach einer ersten Ausführungsform dadurch gelöst, daß als Drehlager ein Kippmomente aufnehmendes Drehlager vorgesehen ist, bei dem auf einer oberseitigen Schulter eines zweiten Lagerringes ein eine kreisringförmige Stützfläche aufweisendes, vorzugsweise als Ringflansch ausgebildetes Stützelement aufliegt, wobei der Tragarm an einem radial nach außen über das Drehlager vorstehenden flanschartigen Teil des Stützelementes hängend montiert ist.

Eine besonders einfache Ausführungsform eines erfindungsgemäßen Tragturmes ist dadurch gekennzeichnet, daß als Drehlager ein Kippmomente aufnehmendes Drehlager vorgesehen ist, bei dem der zweite Lagerring, der als Lageraußenring ausgebildet ist, den Tragarm überragt, wobei der Tragarm direkt am Lageraußenring hängend montiert ist.

Zweckmäßig ist der Tragarm mittels Zugschrauben am flanschartigen Teil des Stützelementes montiert, wodurch sich die Montage und Demontage besonders einfach gestalten.

Gemäß einer vorteilhaften Ausführungsform ist der Tragarm mittels einer Renkverbindung am flanschartigen Teil des Stützelementes montiert, wobei an dem Tragarm den flanschartigen Teil des Stützelementes übergreifende Pratzen vorgesehen sind, wodurch die Montage bzw. Demontage des Drehlagers besonders schnell vor sich geht.

Vorteilhaft ist als Drehlager eine Rollen-Drehverbindung vorgesehen, deren Lagerinnenring mit der unverdrehbaren Tragsäule verschraubt und deren Lageraußenring mit dem Stützelement verschraubt ist.

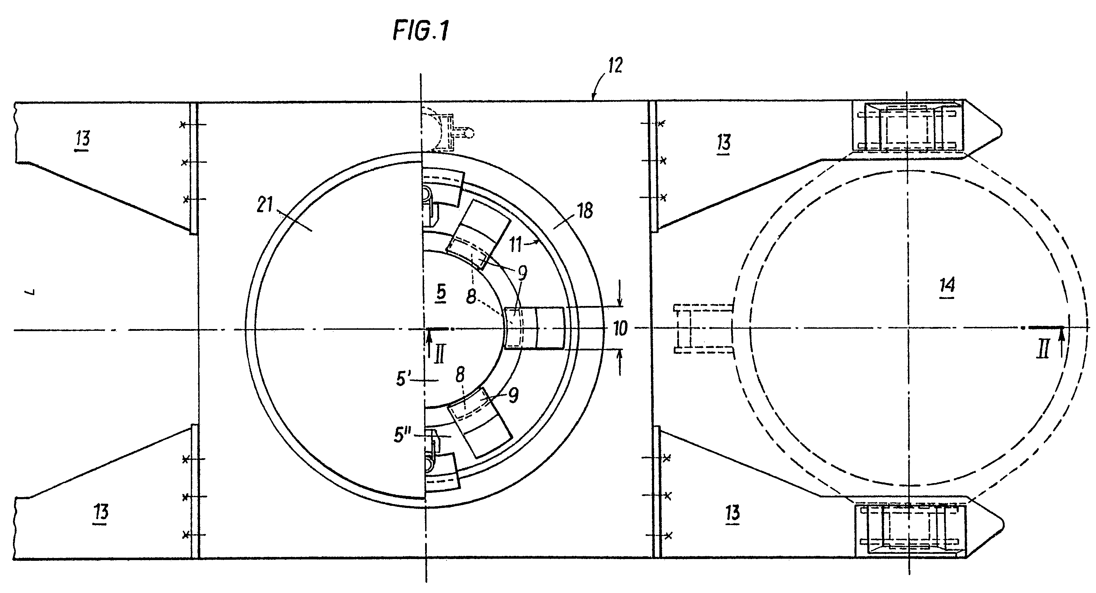

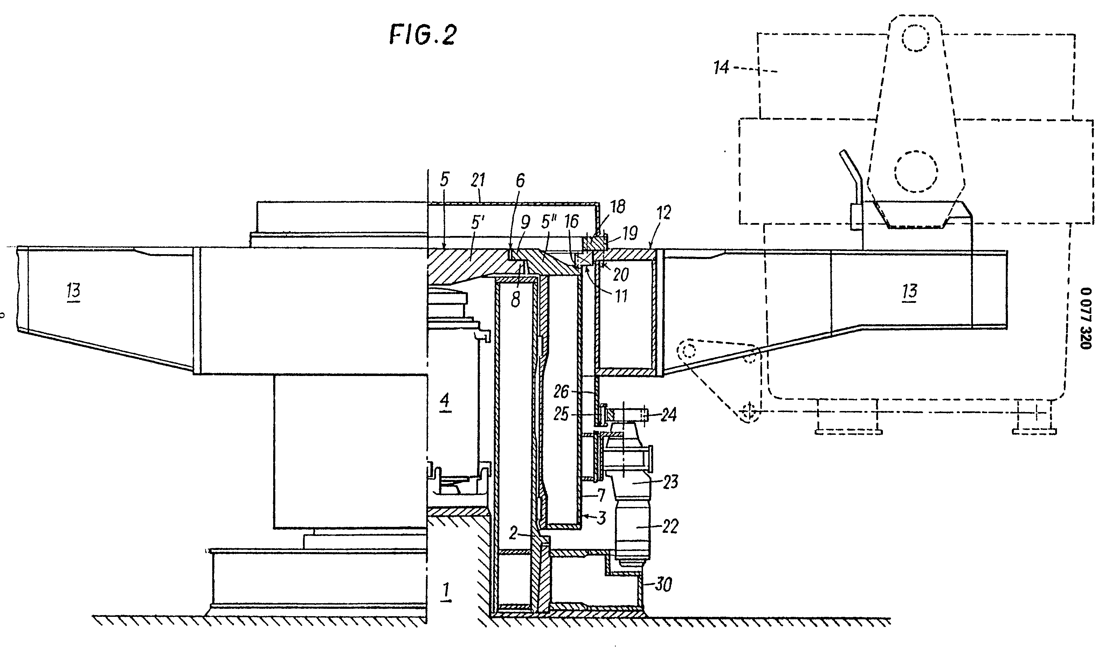

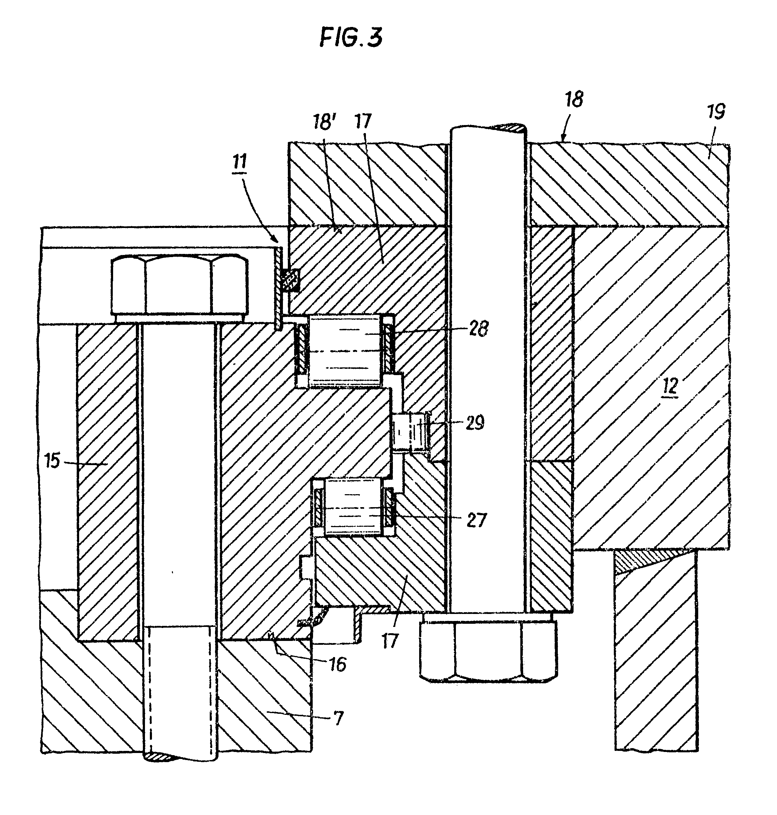

Die Erfindung ist nachfolgend anhand der Zeichnung näher erläutert, wobei Fig. 1 eine Draufsicht und Fig. 2 eine teilweise gemäß der Linie II-II geschnittene Seitenansicht der Fig. 1 zeigen. Fig. 3 veranschaulicht ein Detail der Fig. 1 in vergrößertem Maßstab.

Auf einem Fundament 1 ist ein ortsfester Teil 2 einer Tragsäule 3 starr montiert. Diese Tragsäule ist hohl; in ihrem Inneren ist ein Hydraulikzylinder 4 aufgestellt, der sich einerseits gegen das Fundament 1 stützt und andererseits mit einer aus zwei Teilen 5', 5" mittels einer Renk- bzw. Bajonettverbindung 6 zusammengesetzten Stirnplatte 5, die einen den ortsfesten Teil 2 dieser Tragsäule 3 peripher umgebenden und gegenüber diesem heb- und senkbaren Teil 7 der Tragsäule 3 trägt, in Anlage gebracht werden kann. Die Stirnplatte 5 weist einen mittleren kreisförmigen Teil 5' auf, von dem radial nach außen gerichtete Fortsätze 8 abstehen. Der radiale äußere Teil 5" der Stirnplatte 5 weist diese Fortsätze 8 übergreifende Pratzen 9 auf, die mit dem heb- und senkbaren Teil 7 der Tragsäule 3 verschweißt sind. In Umfangsrichtung sind die radial nach außen gerichteten Fortsätze 8 um etwas mehr als die in Umfangsrichtung gemessene Breite 10 der Pratzen 9 voneinander entfernt, so daß der mittlere Teil 5' der Stirnplatte 5 durch Verdrehen derselben, bis die Fortsätze 8 zwischen den Pratzen 9 zu liegen kommen, abgehoben werden kann, wodurch der Hydraulikzylinder 4 zugänglich ist.

An dem heb- und senkbaren Teil 7 der Tragsäule 3 ist mittels eines Drehlagers 11 ein Tragarm 12 für zwei metallurgische Gefäße drehbar gelagert, welcher Tragarm diametral gegenüberliegende Gabelarmpaare 13 zum seitlichen Umgreifen zweier metallurgischer Gefäße aufweist. In der Zeichnung ist ein metallurgisches Gefäß 14, nämlich eine Gießpfanne, mit strichlierten Linien auf einem Gabelarmpaar 13 aufgesetzt dargestellt.

Erfindungsgemäß ist zwischen diesem Tragarm und dem heb- und senkbaren Teil der Tragsäule ein einziges, Zug- und Druckkräfte aufnehmendes Drehlager 11, wie eine Rollen-Drehverbindung, vorgesehen, wobei dieses Lager mit seinem Lagerinnenring 15 an einer kreisringförmigen Stützfläche 16 des heb- und senkbaren Teiles 7 der Tragsäule 3 aufliegt und mit dieser verschraubt ist. Der Lageraußenring 17 des Drehlagers ist mit einem als Ringflansch ausgebildeten Stützelement 18 verschraubt, wobei das Stützelement mit einer kreisringförmigen Stützfläche 18' von oben auf den Lageraußenring aufgesetzt ist. An dem Ringflansch 18 ist der Tragarm 12 hängend montiert, wobei der Tragarm mit einem radial nach außen über das Drehlager 11 vorstehenden flanschartigen Teil 19 des Ringflansches 18 mittels Zugschrauben 20 verschraubt ist. Auf den Ringflansch ist eine die Tragsäule 3 überdeckende Abdeckhaube 21 montiert.

Als Drehantrieb ist ein am heb- und senkbaren Teil 7 der Tragsäule 3 montierter Motor 22 mit Getriebe 23 und Antriebsritzel 24 vorgesehen, wobei das Ritzel 24 in einen Triebstock 25, der an einem unterhalb des Tragarmes 12 vorgesehenen Flansch 26 des Tragarmes montiert ist, eingreift.

Wie aus Fig. 3 ersichtlich ist, besteht die Rollen-Drehverbindung 11 aus einem einteiligen Lagerinnenring 15, der über zwei Axialrollenreihen 27, 28 und eine Radialrollenreihe 29 an einem zweiteiligen Lageraußenring 17 abgestützt ist. Eine Rollen-Drehverbindung dieser Art ist für hohe Lasten, wie metallurgische Gefäße, besonders geeignet.

Um die Drehlagerung 11 zugänglich zu machen, wird zunächst der Tragarm 12 mittels Hubelemente vertikal abgestützt. Die Hubelemente werden zu diesem Zweck auf einer Konsole 30 der Tragsäule angeordnet. Sodann werden die Schraubverbindungen des Tragarmes mit dem Lageraußenring 17 des Lagers 11 gelöst, worauf der Ringflansch 18, der ein leicht zu manipulierender Teil ist, mittels eines kleinen Montagekranes oder einer sonstigen Hubvorrichtung abgehoben werden kann. Nach Lösen der Schraubverbindung des Innenringes 15 mit dem heb- und senkbaren Teil 7 der Tragsäule 3 kann das Lager 11 ausgebaut werden, ohne daß es erforderlich ist, den Tragarm 12 vom Tragturm zu entfernen.

Die Erfindung beschränkt sich nicht auf das in der Zeichnung dargestellte Ausführungsbeispiel, sondern kann in verschiedener Hinsicht modifiziert werden. So ist es beispielsweise möglich, zwischen dem Tragarm 12 und dem als Ringflansch 18 ausgebildeten Stützelement anstelle der Zugschrauben 20 eine Renk- bzw. Bajonettverbindung, ähnlich wie sie für die beiden, die Stirnplatte 5 bildenden Teile 5', 5" vorgesehen ist, zu verwenden. Auch könnte der Tragarm 12 direkt an dem Lageraußenring 17 hängend montiert sein, beispielsweise mittels Stiftschrauben. In diesem Fall übergreift der Lageraußenring 17 den Tragarm 12. Weiter ist es möglich, zwei übereinander unabhängig voneinander verschwenkbare Tragarme an der Tragsäule vorzusehen, wobei die den Durchtritt der Tragsäule ermöglichenden Innendurchmesser unterschiedlich groß gewählt sind, um die Lager von oben her ausbauen zu können.

## Patentansprüche

1. Tragturm für ein metallurgisches Gefäß, insbesondere für eine Gießpfanne (14) bei einer Stranggießanlage, mit mindestens einem von einer unverdrehbaren Tragsäule (3) auskragenden und um die Tragsäule (3) schwenkbaren, mindestens ein metallurgisches Gefäß (14) haltenden Tragarm (12), wobei zwischen dem Tragarm (12) und der Tragsäule (3) ein einziges Axial- und Radialkräfte aufnehmendes Drehlager (11) vorgesehen ist, das mit einer unterseitigen Schulter eines ersten Lagerringes (15) an einer am oberen Ende der Tragsäule (3) angeordneten Stützfläche (16) aufliegt, dadurch gekennzeichnet, daß als Drehlager (11) ein Kippmomente aufnehmendes Drehlager (11) vorgesehen ist, bei dem auf einer oberseitigen Schulter eines zweiten Lagerringes (17) ein eine kreisringförmige Stützfläche (18') aufweisendes, vorzugsweise als Ringflansch ausgebildetes Stützelement (18) aufliegt, wobei der Tragarm (12) an einem radial nach außen über das Drehlager (11) vorstehenden flanschartigen Teil (19) des Stützelementes (18) hängend montiert ist.

2. Tragturm für ein metallurgisches Gefäß, insbesondere für eine Gießpfanne (14) bei einer Stranggießanlage, mit mindestens einem von einer unverdrehbaren Tragsäule (3) auskragenden und um die Tragsäule (3) schwenkbaren, mindestens ein metallurgisches Gefäß (14) haltenden Tragarm (12), wobei zwischen dem Tragarm (12) und der Tragsäule (3) ein einziges Axial- und Radialkräfte aufnehmendes Drehlager (11) vorgesehen ist, das mit einer unterseitigen Schulter eines ersten Lagerringes (15) an einer am oberen Ende der Tragsäule (3) angeordneten Stützfläche (16) aufliegt, dadurch gekennzeichnet, daß als Drehlager (11) ein Kippmomente aufnehmendes Drehlager (11) vorgesehen ist, bei dem der zweite Lagerring (17), der als Lageraußenring ausgebildet ist, den Tragarm (12) überragt, wobei der Tragarm (12) direkt am Lageraußenring hängend montiert ist.

3. Tragturm nach Anspruch 1, dadurch gekennzeichnet, daß der Tragarm (12) mittels Zugschrauben (20) am flanschartigen Teil (19) des Stützelementes (18) montiert ist.

4. Tragturm nach Anspruch 1, dadurch gekennzeichnet, daß der Tragarm (12) mittels einer Renkverbindung am flanschartigen Teil (19) des Stützelementes (18) montiert ist, wobei an dem Tragarm (12) den flanschartigen Teil (19) des Stützelementes (18) übergreifende Pratzen vorgesehen sind.

5. Tragturm nach den Ansprüchen 1 oder 3 oder 4, dadurch gekennzeichnet, daß als Drehlager (11) eine Rollen-Drehverbindung vorgesehen ist, deren Lagerinnenring (15) mit der unverdrehbaren Tragsäule (3) verschraubt und deren Lageraußenring (17) mit dem Stützelement (18) verschraubt ist.

**Claims**

1. A carrying tower for a metallurgical vessel, in particular for a casting ladle (14) at a continuous casting plant, comprising at least one carrying arm (12) cantilevering from a non-rotatable carrying column (3) and pivotable about the carrying column (3), carrying at least one metallurgical vessel (14), a single pivot bearing (11) being provided between the carrying arm (12) and the carrying column (3) to accommodate axial and radial forces, which rests, with a lower-side shoulder of a first bearing race (15), on a supporting surface (16) arranged on the upper end of the carrying column (3), characterised in that, as the pivot bearing (11), a pivot bearing (11) accommodating tilting moments is provided, at which, on a upper-side shoulder of a second bearing race (17), a supporting element (18) rests, which comprises a circularly-ring-shaped supporting surface (18') and, preferably, is designed as an annular flange, the carrying arm (12) being mounted so as to suspend from a flange-like part (19) of the supporting element (18) projecting radially outwardly beyond the pivot bearing (11).

2. A carrying tower for a metallurgical vessel, in particular for a casting ladle (14) at a continuous casting plant, comprising at least one carrying arm (12) cantilevering from a non-rotatable carrying column (3) and pivotable about the carrying column (3), carrying at least one metallurgical vessel (14), a single pivot bearing (11) being provided between the carrying arm (12) and the carrying column (3) to accommodate axial and radial forces, which rests, with a lower-side shoulder of a first bearing race (15), on a supporting surface (16) arranged on the upper end of the carrying column (3), characterised in that, as the pivot bearing (11), a pivot bearing (11) accommodating tilting moments is provided, with which the second bearing race (17), which is designed as a bearing outer race, rises above the carrying arm (12), the carrying arm (12) being mounted so as to directly suspend from the bearing outer race.

3. A carrying tower according to claim 1, characterised in that the carrying arm (12) is mounted to the flange-like part (19) of the supporting element (18) by means of tension screws (20).

4. A carrying tower according to claim 1, characterised in that the carrying arm (12) is mounted to the flange like part (19) of the supporting element (18) by means of a Renk's connection, lugs that overlap the flange-like part (19) of the supporting element (18) being provided on the carrying arm (12).

5. A carrying tower according to claim 1 or 3 or 4, characterised in that, as the pivot bearing (11), a roller pivot connection is provided, whose bearing inner race (15) is screwed with the non-rotatable carrying column (3) and whose bearing outer race (17) is screwed with the supporting element (18).

**Revendications**

1. Tour porteuse pour un récipient métallurgique, en particulier pour une poche de coulée (14) dans une installation de coulée continue, comprenant au moins un bras porteur (12) portant au moins un récipient métallurgique (14), disposé en potence par rapport à une colonne porteuse non rotative (3) et qui peut pivoter autour de la colonne porteuse (3) et dans laquelle is est prévu entre le bras porteur (12) et la colonne porteuse (3) unpalier unique (11) capable de résister aux forces axiales et radiales, qui repose par un épaulement de la face inférieure d'une première couronne de palier (15) sur une surface d'appui (16) prévue à l'extrémité supérieure de la colonne porteuse (3), caractérisée en ce qu'il est prévu, comme palier (11), un palier capable de résister aux couples de renversement, dans lequel, un élément d'appui (18) présentant une surface d'appui en couronne de cercle (18'), et qui est de préférence constitué par une bride annulaire, repose sur un épaulement de la face supérieure d'une deuxième couronne de palier (17), le bras porteur (12) étant monté suspendu à une partie (19) en forme de bride de l'élément d'appui (18) qui fait saillie radialement vers l'extérieur au-delà du palier (11).

2. Tour porteuse pour un récipient métallurgique, en particulier pour une poche de coulée (14) dans une installation de coulée continue, comprenant au moins un bras porteur (12) portant au moins un récipient métallurgique (14), disposé en potence par rapport à une colonne porteuse non rotative (3) et qui peut pivoter autour de la colonne porteuse (3), et dans laquelle il est prévu entre le bras porteur (12) et la colonne porteuse (3) un palier unique (11) capable de résister aux forces axiales et radiales, qui repose par un épaulement de la face inférieure d'une première couronne de palier (15) sur une surface d'appui (16) disposée à l'extrémité supérieure de la colonne porteuse (3), caractérisée en ce qu'il est prévu comme palier (11), un palier (11) capable de résister aux couples de renversement, dans lequel la deuxième couronne du palier (17), qui constitue une couronne extérieure de palier, empiète sur le bras porteur (12), ce bras porteur (12) étant monté directement suspendu à la couronne extérieure du palier.

3. Tour porteuse selon la revendication 1, caractérisée en ce que le bras porteur (12) est fixé à la partie en forme de bride (19) de l'élément d'appui (18) au moyen de la vis de traction (20).

4. Tour porteuse selon la revendication 1, caractérisée en ce que le bras porteur (12) est assemblé au moyen d'un assemblage à baïonnette à la partie en forme de bride (19) de l'élément d'appui (18), des griffes qui prennent sur la partie en forme de bride (19) de l'élément d'appui (18) étant prévues sur le bras porteur (12).

5. Tour porteuse selon l'une des revendications 1, 3 et 4, caractérisée en ce qu'il y est prévu, comme palier (11), un roulement à rouleaux dont la couronne intérieure (15) est assemblée à la colonne porteuse non rotative (3) par des vis et dont la couronne extérieure (17) est assemblée à l'élément d'appui (18) par des vis.

FIG.1

FIG.2

# FIG.3